# EUROPEAN PATENT APPLICATION

(11) **EP 2 381 733 A2**
(43) Date of publication of application: **26.10.2011**
(21) Application number: 11157550.2
(22) Date of filing: 09.03.2011
(51) Int. Cl.: H04W 76/04

(54) **Communications system, carrier-side communication apparatus, base station apparatus, and communication method therefor**

(30) Priority: 26.04.2010 JP 2010101101
(71) Applicant: FUJITSU LIMITED, Kawasaki-shi, Kanagawa 211-8588 (JP)
(72) Inventor: Nitta, Daisuke, Kawasaki-shi Kanagawa 211-8588 (JP); Kawai, Hiromitsu, Kawasaki-shi Kanagawa 211-8588 (JP); Yokosawa, Tadanori, Kawasaki-shi Kanagawa 211-8588 (JP)
(74) Representative: Holz, Ulrike

(57) **Abstract**

In a communications system, a first upper node performs communication through a first communication session, and a second upper node performs communication through a second communication session. An upper communication control unit controls those upper nodes. A first communication unit communicates with the first upper node through the first communication session established therewith. A second communication unit communicates with the second upper node through the second communication session established therewith. A communication control unit controls those communication units. The communication control unit and the upper communication control unit perform communication path switching so as to use the second communication session to transport a signal intended for the first communication session, when the first communication sessions is disrupted, or when the number of existing first communication sessions has reached an upper limit that the first upper node can handle.

## Description

### FIELD

The embodiments discussed herein relate to a communications system that performs data communication, as well as to a carrier-side communication device, a base station apparatus, and a communication method therefor.

### BACKGROUND

Third generation (3G) mobile communications systems using wideband code-division multiple access (W-CDMA) techniques have rapidly gained popularity, and their outdoor population coverage has reached almost 100 percent. Their indoor population coverage, on the other hand, is not so high as the outdoor coverage because of the presence of obstacles to radio propagation and additional operating cost of indoor base stations.

Recent years have seen an increased interest in miniature radio base stations called "femtocells." Femtocells are suitable for use in home and office environments, and many of them are designed on the basis of 3G technology. For example, a femtocell enables about four users within several tens of meters to enjoy communication services simultaneously. Femtocells may be deployed in high-rise buildings and residential towns to enhance the indoor coverage of mobile services without having significant impact on the cost of operations. In addition to 3G femtocells noted above, femtocells adapted to the Long Term Evolution (LTE) standard have also been developed, which are sometimes referred to as 3.9G systems. 3G femtocells establish an luh session to an upper-level network device for the purpose of call connection. LTE femtocells establish an S1 session to an upper-level network device.

In this technical field, one proposed technique provides an IPsec tunnel, not between a terminal device and a base station, but only between the base station and gateway when supporting handoff of the terminal device (see Japanese Laid-open Patent Publication No. 2009-94651). According to another proposed technique, a femtocell accepts a session switching request from a mobile terminal. In response, the femtocell assigns other base station to the requesting mobile terminal and then commands the mobile terminal to release its radio connection to the femtocell (see Japanese Laid-open Patent Publication No. 2010-16602). Yet another proposed technique enables an IP multimedia subsystem (IMS) network to directly serve 3G circuit-switched (CS) terminals, as well as realizing a bearer protocol conversion (see Japanese Laid-open Patent Publication No. 2008-205698).

Femtocells may be designed to support both 3G and LTE technologies. Such femtocells are referred to as dual femtocells. A dual femtocell includes 3G and LTE gateways to handle both the 3G and LTE communication protocols, and luh and S1 sessions are established with the 3G and LTE gateways, respectively.

A communications system may employ dual femtocells with multiple radio access technologies (RAT) such as 3G and LTE. In this system, however, some failure in one gateway facility would immediately result in a breakdown of communication in its corresponding RAT if the system does not have communication path switching capabilities or redundant communication channels. That is, a failure in a 3G gateway would disrupt ongoing 3G communication, and a failure in an LTE gateway would disrupt ongoing LTE communication. This could be a drawback of the system in which the 3G and LTE networks operate independently of each other.

As can be seen from the above discussion, the lack of appropriate communication path switching capabilities makes it impossible for the communications system to recover from disruption of communication. The communications system cannot help but stop its communication services.

Another drawback of the above-described system is that the traffic load cannot be distributed among the gateways that support different RATs. For example, even if the 3G gateway encounters an excessive load, the system is unable to distribute the load to its LTE gateway. This means that the system has a weakness in its operability.

### SUMMARY

In view of the foregoing, it is an object of the present invention to provide a communications system that improves the quality of communication services by providing communication path switching functions for load distribution and recovery from communication disruption.

It is another object of the present invention to provide a carrier-side communication apparatus that improves the quality of communication services by providing communication path switching functions for load distribution and recovery from communication disruption.

It is yet another object of the present invention to provide a base station apparatus that improves the quality of communication services by providing communication path switching functions for load distribution and recovery from communication disruption.

It is still another object of the present invention to provide a communication method that improves the quality of communication services by providing communication path switching functions for load distribution and recovery from communication disruption.

According to an aspect of the invention, there is provided a communications system which includes a carrier-side communication apparatus and a base station apparatus. The carrier-side communication apparatus includes a first upper node to perform communication through a first communication session, a second upper node to perform communication through a second communication session, and an upper communication control unit to control the first upper node and the second upper node. The base station apparatus includes a first communication unit to communicate with the first upper node through the first communication session established therewith, a second communication unit to communicate with the second upper node through the second communication session established therewith, and a communication control unit to control the first communication unit and the second communication unit. The communication control unit and the upper communication control unit are configured to perform communication path switching so as to use the second communication session to transport a signal intended for the first communication session, when the first communication session is disrupted, or when the number of existing first communication sessions has reached an upper limit that the first upper node can handle.

### BRIEF DESCRIPTION OF DRAWINGS

FIG. 1 illustrates an example structure of a communications system;
FIGS. 2 and 3 illustrate an example of overall structure of the radio communications system;
FIG. 4 illustrates a sequence of LTE communication using a 3G-side communication path;
FIG. 5 illustrates another sequence of LTE communication using a 3G-side communication path;
FIG. 6 illustrates yet another sequence of LTE communication using a 3G-side communication path;
FIG. 7 illustrates still another sequence of LTE communication using a 3G-side communication path;
FIG. 8 illustrates a sequence of 3G communication using an LTE-side communication path;
FIG. 9 illustrates another sequence of 3G communication using an LTE-side communication path;
FIG. 10 illustrates yet another sequence of 3G communication using an LTE-side communication path;
FIG. 11 illustrates still another sequence of 3G communication using an LTE-side communication path;
FIG. 12 illustrates a sequence of LTE communication using a 3G-side communication path as a redundant communication path;
FIG. 13 illustrates a sequence of 3G communication using an LTE-side communication path as a redundant communication path;
FIG. 14 illustrates a data format of a communication disruption notice;
FIG. 15 illustrates a data format of a response to the communication disruption notice;
FIG. 16 illustrates a data format of a session switching request;
FIG. 17 illustrates a data format of a response to the session switching request;
FIG. 18 illustrates a data format of an excessive session notice;
FIG. 19 illustrates a data format of a response to the excessive session notice;
FIG. 20 illustrates a data format of a redundant path setup request;
FIG. 21 illustrates a data format of a response to the redundant path setup request;
FIG. 22 illustrates a data format of control messages;
FIG. 23 illustrates protocol stacks of luh;
FIG. 24 illustrates protocol stacks of S1; and
FIG. 25 illustrates a protocol stack of TR-069.

### DESCRIPTION OF EMBODIMENTS

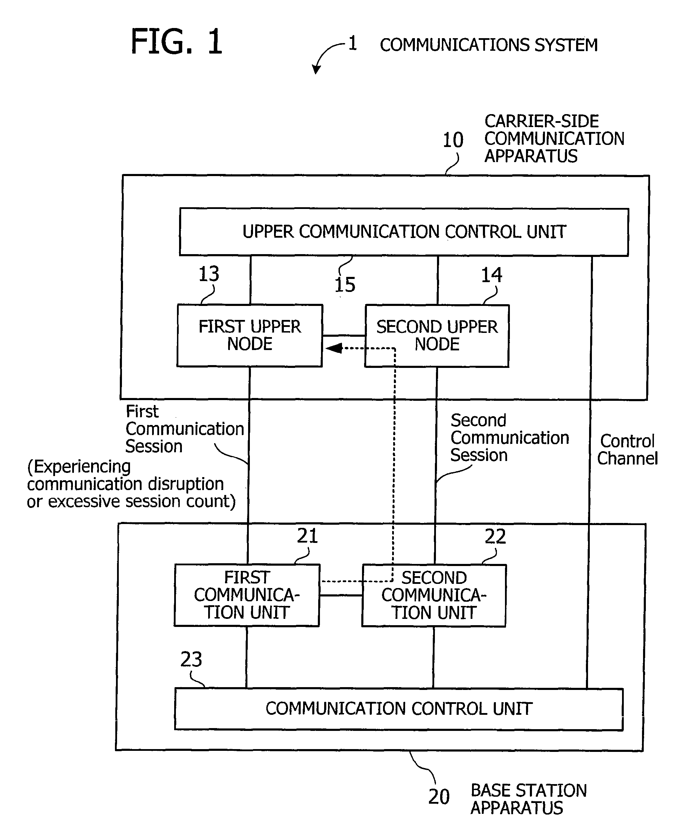

Preferred embodiments of the present invention will be described below with reference to the accompanying drawings, wherein like reference numerals refer to like elements throughout. FIG. 1 illustrates an example structure of a communications system. The illustrated communications system 1 includes a carrier-side communication apparatus 10 and a base station apparatus 20. The carrier-side communication apparatus 10 includes a first upper node 13, a second upper node 14, and an upper communication control unit 15. The base station apparatus 20 includes a first communication unit 21, a second communication unit 22, and a communication control unit 23.

The first upper node 13 performs communication through first communication sessions. The second upper node 14 performs communication through second communication sessions. The second upper node 14 is coupled to the first upper node 13. The upper communication control unit 15 controls the carrier-side communication apparatus 10 as a whole, including control of the first upper node 13 and second upper node 14.

The first communication unit 21 communicates with the first upper node 13 through a first communication session established therewith. The second communication unit 22 communicates with the second upper node 14 through a second communication session established therewith. The second communication unit 22 is coupled to the first communication unit 21. The communication control unit 23 controls the base station apparatus 20 as a whole, including control of the first communication unit 21 and second communication unit 22.

The communication control unit 23 and upper communication control unit 15 work together to perform communication path switching so as to use the second communication session to transport a signal intended for the first communication session, when the first communication session is disrupted, or when the number of existing first communication sessions has exceeded a given upper limit that the first upper node can handle. The latter event is referred to herein as "excessive session count."

In operation, the first communication unit 21 detects disruption of communication in its first communication session and thus notifies the communication control unit 23 of the detected communication disruption. The communication control unit 23 propagates this information to the upper communication control unit 15 by sending a communication disruption notice over a control channel that conveys control signals between the carrier-side communication apparatus 10 and base station apparatus 20.

Upon notification of the communication disruption concerning the first communication session, the communication control unit 23 causes the first communication unit 21 and second communication unit 22 to switch communication paths from the first communication session to the second communication session, thus making the traffic detour around the disrupted first communication session. Also, upon receipt of the communication disruption notice concerning the first communication session, the upper communication control unit 15 causes the first upper node 13 and second upper node 14 to switch communication paths from the first communication session to the second communication session, thus making the traffic detour around the disrupted first communication session.

The first upper node 13 may also detect disruption of communication in a first communication session. When this is the case, the first upper node 13 notifies the upper communication control unit 15 of the communication disruption. The upper communication control unit 15 then propagates the information to the communication control unit 23 via the control channel by sending a communication disruption notice.

Upon notification of the communication disruption concerning the first communication session, the upper communication control unit 15 causes the first upper node 13 and second upper node 14 to switch communication paths from the disrupted first communication session to the second communication session, thus making the traffic detour around the disrupted session. Also, upon receipt of the communication disruption notice concerning the first communication session, the communication control unit 23 causes the first communication unit 21 and second communication unit 22 to switch communication paths from the disrupted first communication session to the second communication session, thus making the traffic detour around the disrupted session.

Suppose now that the first communication unit 21 issues a request for setting up a new first communication session. However, if the number of existing first communication sessions has already reached a given upper limit, the first upper node 13 is unable to grant the request. The first upper node 13 thus informs the upper communication control unit 15 of the excessive session count. The upper communication control unit 15 then propagates the information to the communication control unit 23 via a control channel.

The upper communication control unit 15 now recognizes that the number of existing first communication sessions has reached its upper limit. The upper communication control unit 15 thus causes its local first upper node 13 and second upper node 14 to set up a detour by performing communication path switching, i.e., using a second communication session to transport signals intended for a first communication session.

The communication control unit 23 also recognizes that the number of existing first communication sessions has reached its upper limit. The communication control unit 23 thus causes its local first communication unit 21 and second communication unit 22 to set up a detour by performing communication path switching, i.e., using a second communication session to transport signals intended for a first communication session.

The above-described communications system 1 may be implemented as a radio communications system that supports both 3G and LTE technologies. The following section will describe a structure and operation of such a radio communications system.

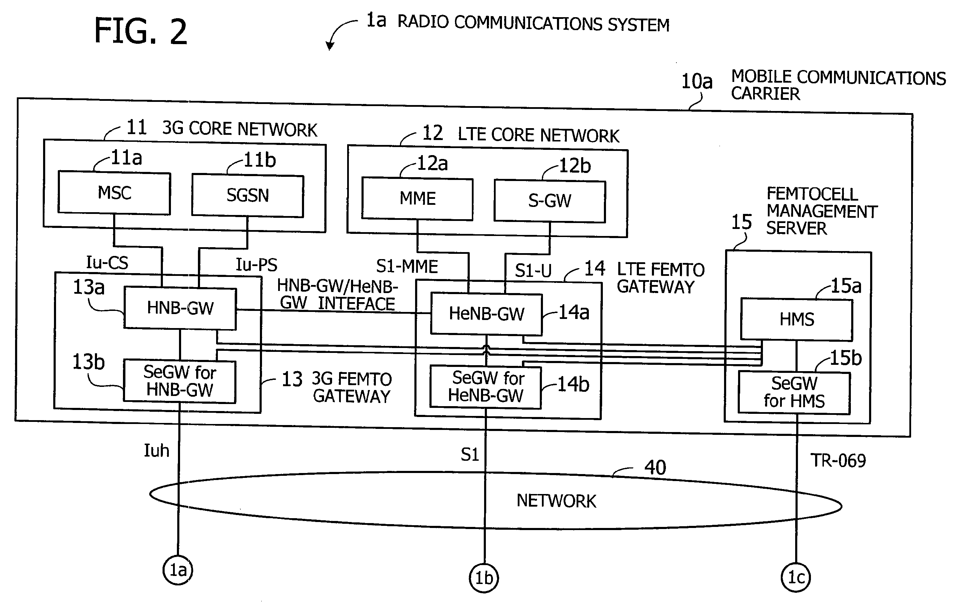

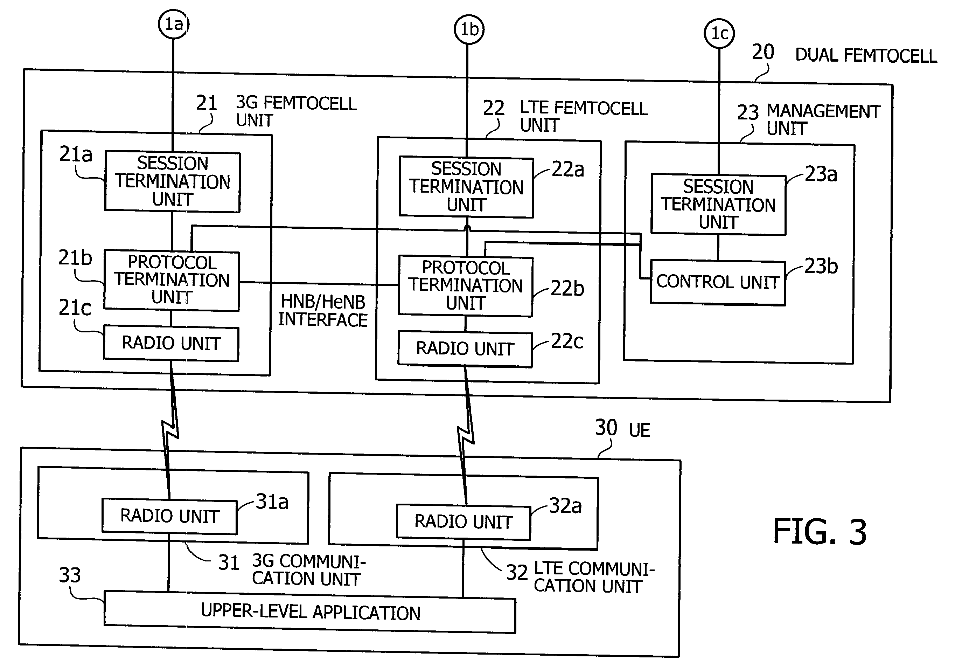

FIGS. 2 and 3 illustrate an example of overall structure of the proposed radio communications system. The illustrated radio communications system 1a includes a mobile communications carrier 10a, a dual femtocell 20, and a piece of user equipment (UE) 30 such as a mobile phone. It is noted that the mobile communications carrier 10a provides functions of the foregoing carrier-side communication apparatus 10. It is also noted that the dual femtocell 20 is equivalent to the foregoing base station apparatus 20.

The mobile communications carrier 10a is connected to the dual femtocell 20 via a network 40. This network 40 may be, for example, a broadband network such as the Internet and intranet. The network 40 may also include a public telephone network. The dual femtocell 20 and UE 30 are connected wirelessly via radio communication links.

The illustrated UE 30 is a radio communication device that is compatible with both the 3G and LTE systems. While not seen in FIGS. 2 and 3, the dual femtocell 20 may also serve other UE devices dedicated to either 3G communication or LTE communication.

To provide the UE 30 with communication services, the mobile communications carrier 10a is formed from the following networks and devices: a 3G core network 11, an LTE core network 12, a 3G femtocell gateway (GW) 13, LTE femto gateway 14, and a femtocell management server 15.

The femtocell management server 15 includes a Home Node-B (HNB) management system (HMS) 15a. The HMS 15a has an interface to communicate with each of the 3G femto gateway 13 and LTE femto gateway 14. Also the 3G femto gateway 13 and LTE femto gateway 14 are connected to each other through their interface.

Specifically, the mobile communications carrier 10a includes the following components:

### (a1) 3G Core Network 11

The 3G core network 11 is a core network that acts as an endpoint of 3G communication (i.e., terminates 3G communication interface). The illustrated 3G core network 11 includes a mobile switching center (MSC) 11a and a Serving GPPRS Support Node (SGSN) 11 b, where GPRS stands for General Packet Radio Service. The MSC 11 a is a core node device that acts as an endpoint or a switch of 3G voice communication. Control signals of the MSC 11a are referred to as lu-CS C-Plane, while U-Plane signals of voice communication are referred to as lu-CS U-Plane. The SGSN 11b is a core node device that acts as an endpoint of 3G packet communication. Control signals of the SGSN 11b for packet communication are referred to as lu-CS U-Plane, and U-Plane signals for packet communication are referred to as lu-PS U-Plane.

### (a2) LTE Core Network 12

The LTE core network 12 is a core network that acts as an endpoint of LTE communication. The LTE core network 12 includes a Mobile Management Entity (MME) 12a and a Serving Gateway (S-GW) 12b. The MME12a is a core node device that acts as an endpoint of control signals used in the LTE packet communication. Those control signals are referred to as S1-MME. The S-GW 12b is a core node device that acts as an endpoint of U-Plane signals in the LTE packet communication. Those U-Plane signals are referred to as S1-U.

### (a3) 3G Femto Gateway 13

The 3G femto gateway 13 is a set of gateway facilities that acts as endpoint of communication protocols used by Home Node B (HNB). Here the term "HNB" refers to a femtocell based on the 3G technology. The 3G femto gateway 13 includes an HNB-GW 13a and a security gateway (SeGW) 13b for HNB-GW. The HNB-GW 13a is a gateway that acts as an endpoint of communication with the 3G femtocell unit 21 and forwards its signals to the MSC 11 a and SGSN 11b at an upper level. The interface between the HNB-GW 13a and 3G femtocell unit 21 is named luh. More specifically, control signals for voice communication are referred to as luh-CS C-Plane. U-Plane signals for voice communication are referred to as luh-CS U-Plane. Control signals for packet communication are referred to as luh-PS C-Plane. U-Plane signals for packet communication are referred to as luh-PS U-Plane.

The HNB-GW 13a also acts as an endpoint of interface to the HeNB-GW 14a in the LTE femto gateway 14. The HNB-GW 13a may further receive a session switching command sent from an HMS 15a in the femtocell management server 15 and provides the HMS 15a with information on the state of sessions and the like.

### (a4) SeGW 13b for HNB-GW

The SeGW 13b for HNB-GW is a security gateway that communicates with the 3G femtocell unit 21 in the dual femtocell 20 via a network 40. Security gateways are network devices that enable secure communication between two networks that use different protocols. In general, encrypted communication functions such as the Security Architecture for Internet Protocol (IPsec) are implemented in security gateways. The SeGW 13b for HNB-GW establishes an IPsec session to a session termination unit 21 a in the 3G femtocell unit 21.

### (a5) LTE Femto Gateway 14

The LTE femto gateway 14 is a set of gateway facilities to terminate communication protocols of Home eNode B (HeNB), i.e., a femtocell based on the LTE technology. The LTE femto gateway 14 includes a HeNB-GW 14a and an SeGW 14b for HeNB.

The HeNB-GW 14a is a gateway that acts as an endpoint of communication with the LTE femtocell unit 22 and forwards signals to the MME 12a and S-GW 12b at an upper level. The interface between the HeNB-GW 14a and LTE femtocell unit 22 is called S1. More specifically, control signals for packet communication are referred to as S1-MME. U-Plane signals for packet communication are referred to as S1-U.

The HeNB-GW 14a also acts as an endpoint of the interface to HNB-GW 13a in the 3G femto gateway 13. Further the HeNB-GW 14a may receive a session switching command sent from an HMS 15a in the femtocell management server 15 and provides the HMS 15a with information on the state of sessions and the like.

The SeGW 14b for HeNB-GW is a security gateway that communicates with the LTE femtocell unit 22 in the dual femtocell 20 via the network 40. The SeGW 14b for HeNB-GW establishes an IPsec session to a session termination unit 22a in the LTE femtocell unit 22.

### (a6) Femtocell Management Server 15

The femtocell management server 15 is a maintenance and management node that is deployed to manage a plurality of dual femtocells including the illustrated femtocell 20. The femtocell management server 15 includes an HMS 15a and an SeGW 15b for HMS.

The HMS 15a communicates with a management unit 23 in the dual femtocell 20 by using control protocols such as TR-069 to control, for example, the procedure of session switching between 3G communication paths and LTE communication paths. The functions of HMS are specified in relevant standard specifications and this description does not describe their details. TR-069 is a technical specification of Broadband Forum, entitled "CPE WAN Management Protocol." CPE stands for "customer premises equipment," and WAN means "wide area network."

The SeGW 15b for HMS is a security gateway that communicates with a management unit 23 in the dual femtocell 20 via the network 40. Specifically, the SeGW 15b for HMS establishes an IPsec session to a session termination unit 23a in the management unit 23.

Referring now to FIG. 3, the components of the dual femtocell 20 will be described below. The dual femtocell 20 is a subminiature base station designed for use in home, office, and commercial environments to enable simultaneous communication of up to about four users. The dual femtocell 20 supports both the 3G and LTE technologies.

The dual femtocell 20 includes a 3G femtocell unit 21, an LTE femtocell unit 22, and a management unit 23. The 3G femtocell unit 21 and LTE femtocell unit 22 have an interface to communicate with a control unit 23b in the management unit 23. Also the 3G femtocell unit 21 and LTE femtocell unit 22 have an interface between their respective protocol termination units 21 b and 22b.

### (b1)3G Femtocell Unit 21

The 3G femtocell unit 21 is a collection of functions necessary for providing 3G-based communication. Specifically, the 3G femtocell unit 21 includes a session termination unit 21a, a protocol termination unit 21 b, and a radio unit 21c, as will be detailed below.

The session termination unit 21a is a security gateway coupled to the network 40 for communication with the HNB-GW 13a in the 3G femto gateway 13 at an upper level. The session termination unit 21a establishes an IPsec session to the SeGW 13b for HNB-GW in the 3G femto gateway 13.

The protocol termination unit 21b is a functional block that terminates protocols of luh interface. Specifically, the protocol termination unit 21 b terminates luh-CS C-Plane, luh-CS U-Plane, luh-PS C-Plane, and luh-PS U-Plane. The protocol termination unit 21b also terminates an HNB/HeNB interface to the protocol termination unit 22b in the LTE femtocell unit 22. The protocol termination unit 21b may further receive a session switching command from the control unit 23b in the management unit 23 and provides the control unit 23b with information on the state of sessions and the like.

The radio unit 21c is a functional block that performs wireless communication by using the 3G technology to communicate with the UE 30, which supports both 3G and LTE, as well as with ordinary 3G UE (not illustrated). This wireless interface is referred to as Uu in the 3GPP standard (details are omitted here).

### (b2) LTE Femtocell Unit 22

The LTE femtocell unit 22 is a collection of functions necessary for providing LTE-based communication. Specifically, the LTE femtocell unit 22 includes a session termination unit 22a, a protocol termination unit 22b, and a radio unit 22c, as will be detailed below.

The session termination unit 22a is a security gateway coupled to the network 40 for communication with the HeNB-GW 14a in the LTE femto gateway 14 at an upper level. The session termination unit 22a establishes an IPsec session to the SeGW 14b for HeNB-GW in the LTE femto gateway 14.

The protocol termination unit 22b is a functional block that terminates protocols of S1 interface. Specifically, the protocol termination unit 22b terminates S1-MME and S1-U. The protocol termination unit 22b also terminates an HNB-HeNB interface to the protocol termination unit 21 b in the 3G femtocell unit 21. The protocol termination unit 22b may further receive a session switching command from the control unit 23b in the management unit 23 and provides the control unit 23b with information on the state of sessions and the like.

The radio unit 22c is a functional block that performs wireless communication by using the LTE technology to communicate with the UE 30, which supports both 3G and LTE, as well as with ordinary UE designed for LTE communication (not illustrated). This wireless interface is referred to as LTE-Uu in the 3GPP standard (details are omitted here).

### (b3) Management Unit 23

The management unit 23 communicates with the femtocell management server 15 at the upper level by using TR-069 protocol and the like to send status of sessions and receive session switching commands. The management unit 23 also sends session switching commands to the 3G femtocell unit 21 and LTE femtocell unit 22 and, in response, receives information on the state of sessions.

The session termination unit 23a is a security gateway coupled to the network 40 for communication with the HMS 15a in the femtocell management server 15 at the upper level. The session termination unit 23a establishes an IPsec session to the SeGW 15b for HMS in the femtocell management server 15.

The control unit 23b communicates with the protocol termination unit 21b in the 3G femtocell unit 21, as well as with the protocol termination unit 22b in the LTE femtocell unit 22, to control, for example, a procedure of session switching between the 3G and LTE systems.

The UE 30 is formed from the components described below. The UE 30 is an example implementation of user equipment that enables the user to access network services through a dual femtocell 20. In addition to this UE 30, other UE devices dedicated to either 3G or LTE may also be used for communication of voice and other signal traffic over the network 40. Referring to FIG. 3, the UE 30 includes a 3G communication unit 31, an LTE communication unit 32, and an upper-level application 33.

### (c1) 3G Communication Unit 31

The 3G communication unit 31 is a functional block that performs communication by using the 3G technology. The 3G communication unit 31 includes a radio unit 31a which terminates 3G radio interface Uu (details are omitted here).

### (c2) LTE Communication Unit 32

The LTE communication unit 32 is a functional block that performs communication by using the LTE technology. The LTE communication unit 32 includes a radio unit 32a which terminates LTE radio interface LTE-Uu (details are omitted here).

### (c3) Upper-level Application 33

The upper-level application 33 is a function block that performs processing above the wireless layer (details are omitted here).

The following section will now provide details about operation of the radio communications system 1a. In the proposed radio communications system 1a, the dual femtocell 20, HNB-GW 13a, and HeNB-GW 14a have a function to detect disruption of communication. They achieve the switching of communication paths by interacting with each other through an HMS 15a. The HMS 15a is designed to distribute workload of communication services by collecting information about the amount of communication traffic in the 3G femto gateway 13 and LTE femto gateway 14 and redirecting a denied connection (if any) towards a gateway that is loaded with a smaller amount of traffic.

For example, the radio communications system 1a switches communication paths in response to detection of communication disruption or excessive session. The radio communications system 1a also sets up redundant communication paths. The following description will provide more specific examples of operation.

First, with respect to the functions of switching from an LTE communication path to a 3G communication path, the following three cases will be discussed: (1) LTE communication using a 3G-side communication path when disruption of communication is detected in the dual femtocell 20, (2) LTE communication using a 3G-side communication path when disruption of communication is detected at the HeNB-GW 14a, (3) LTE communication using a 3G-side communication path when an excessive session count is detected at the HeNB-GW 14a or SeGW 14b for HeNB-GW.

Second, with respect to the functions of switching from a 3G communication path to an LTE communication path, the following three cases will be discussed: (4) 3G communication using an LTE-side communication path when disruption of communication is detected in the dual femtocell 20, (5) 3G communication using an LTE-side communication path when disruption of communication is detected at the HNB-GW 13a, (6) 3G communication using an LTE-side communication path when an excessive session count is detected at the HNB-GW 13a or SeGW 13b for HNB-GW.

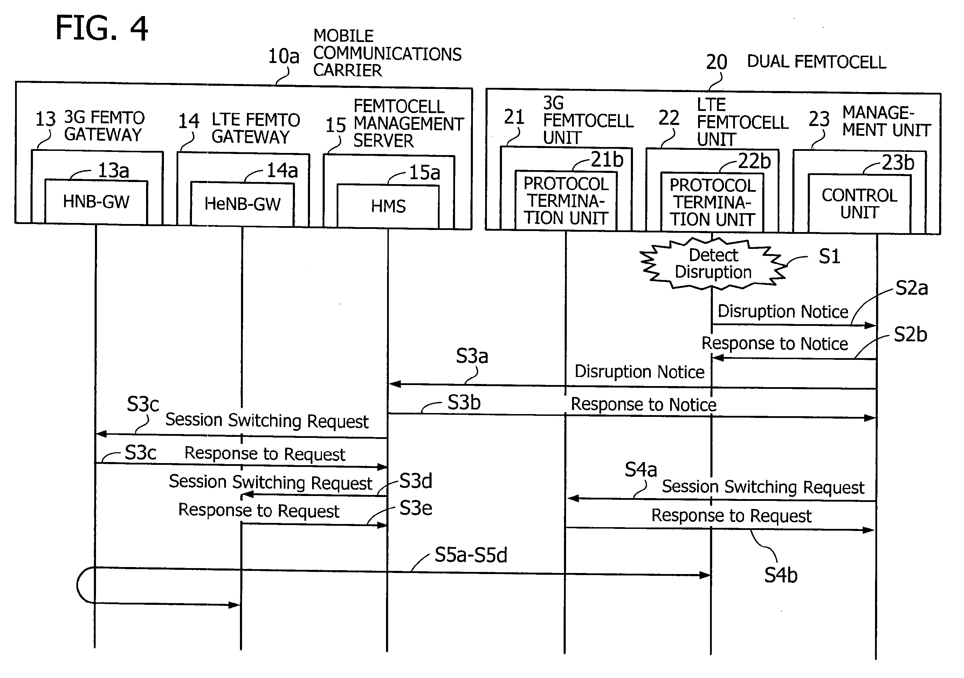

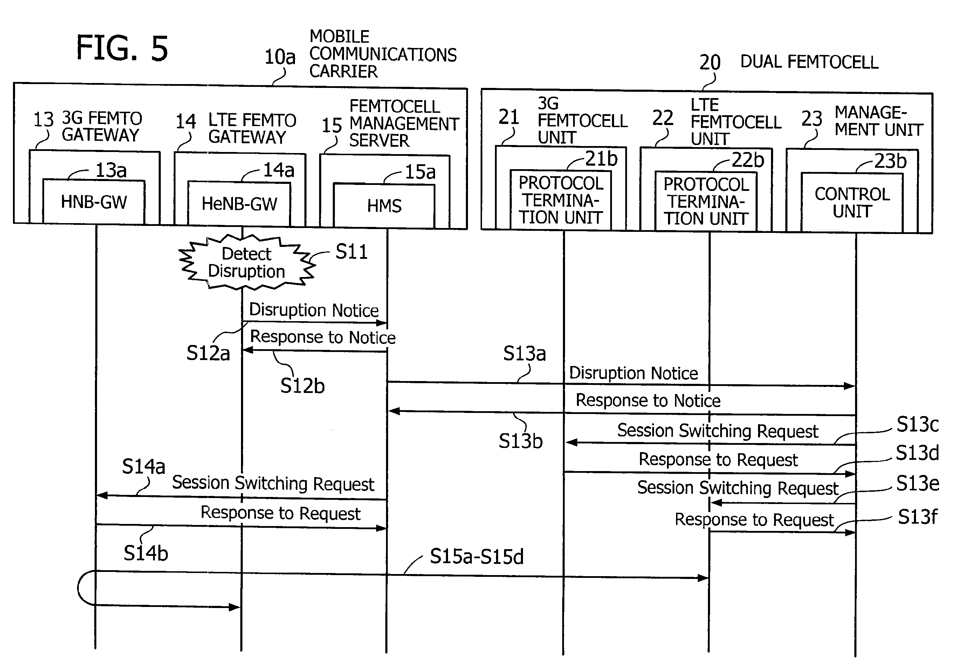

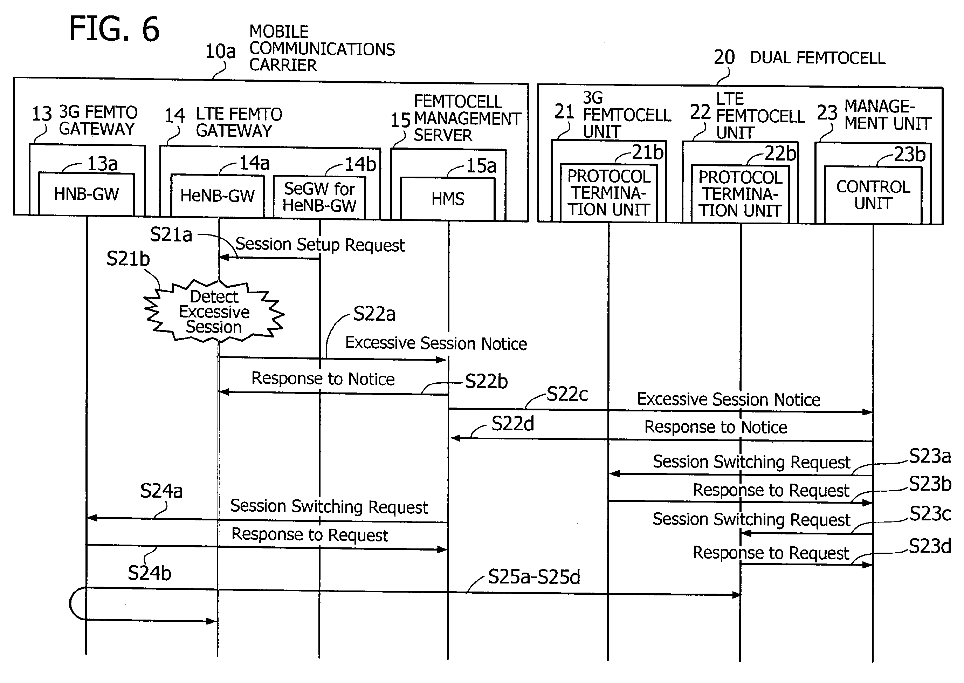

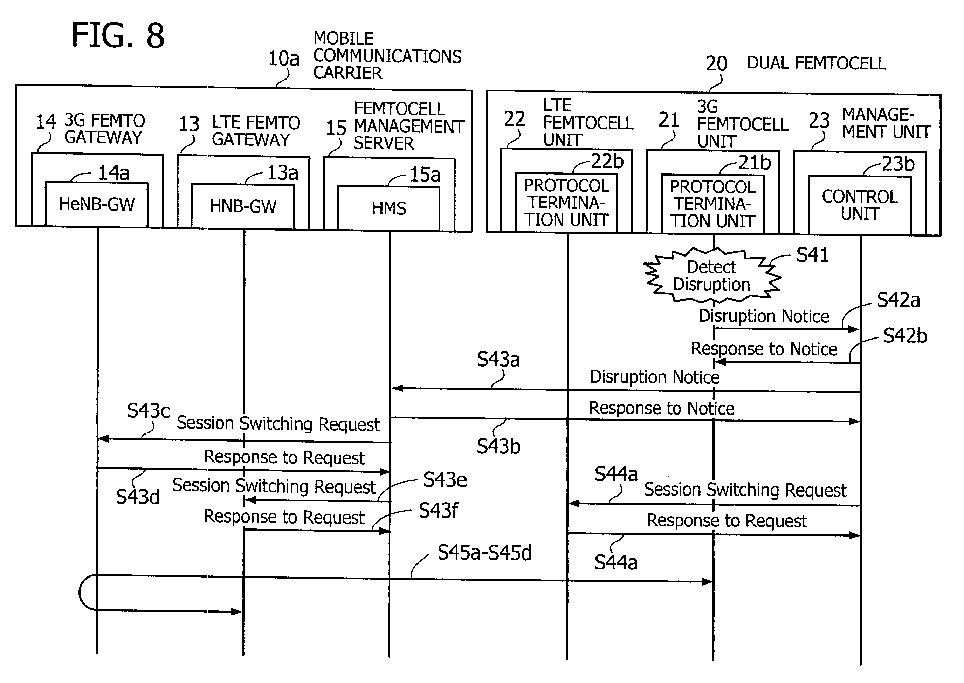

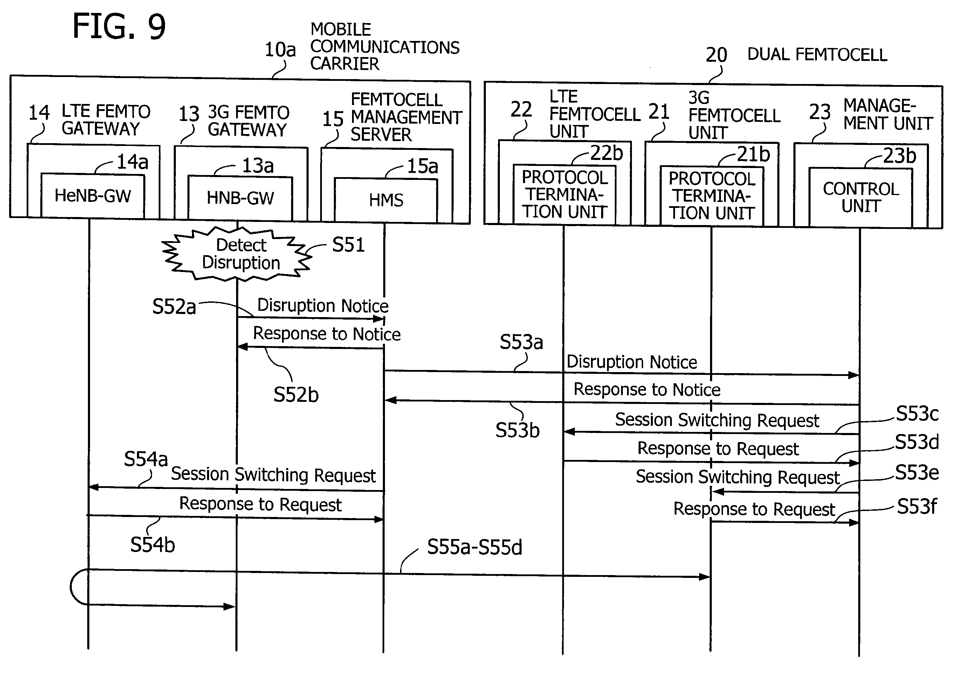

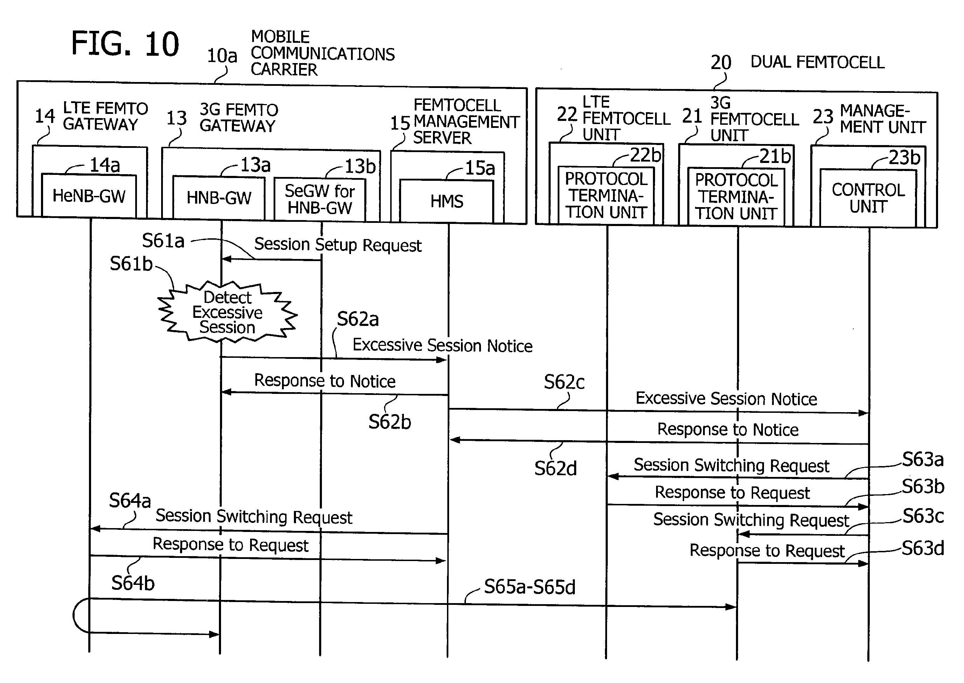

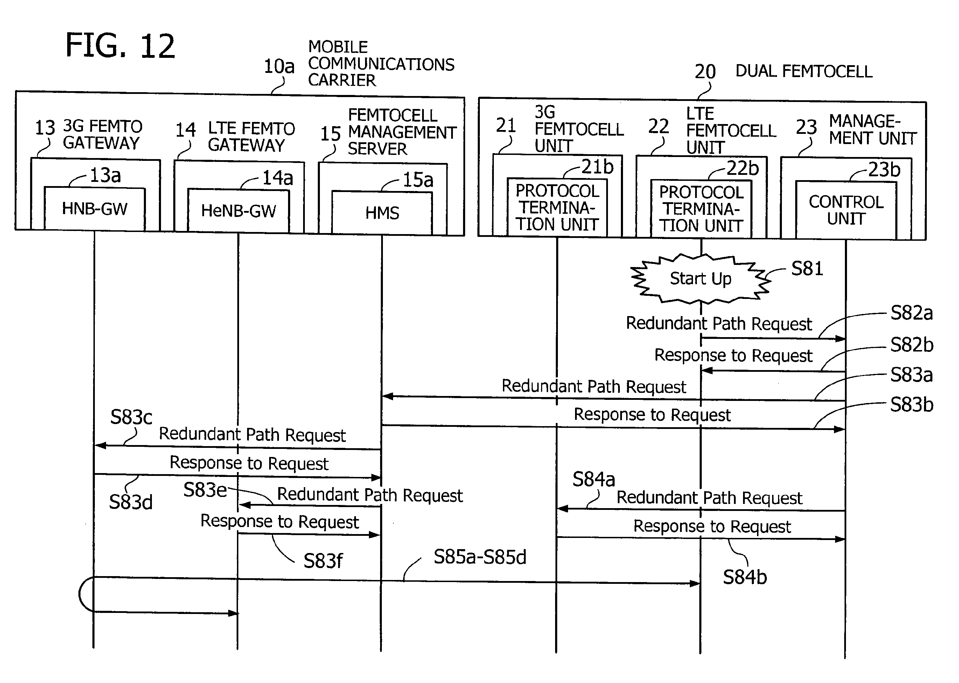

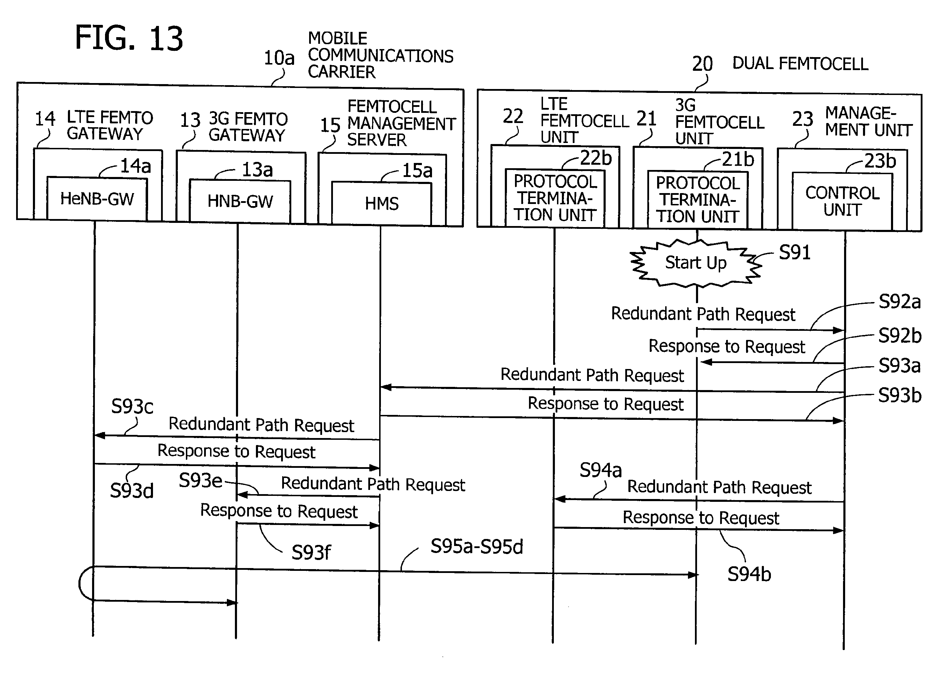

Third, with respect to setup of redundant communication paths, the following two cases will be discussed: (7) LTE communication using a 3G-side communication path for redundancy purposes, and (8) 3G communication using an LTE-side communication path for redundancy purposes. Each of the above cases (1) to (8) will be discussed below.
(1) LTE communication using 3G-side communication path
   FIG. 4 illustrates a sequence of LTE communication using a 3G-side communication path, which performs an LTE-to-3G switchover of communication paths when disruption of communication is detected at the dual femtocell 20.
   (S1) The protocol termination unit 22b in the LTE femtocell unit 22 detects disruption of communication.
   (S2a-S2b) The protocol termination unit 22b notifies the control unit 23b in the management unit 23 of the communication disruption by sending a communication disruption notice (simply "disruption notice" in FIG. 4 and other figures).
   (S3a-S3e) The control unit 23b forwards this communication disruption notice to the HMS 15a. The HMS 15a then sends a session switching request to the HNB-GW 13a and HeNB-GW 14a.
   (S4a-S4b) The control unit 23b sends a session switching request to the protocol termination unit 21 b.
   (S5a) The protocol termination unit 22b sends the protocol termination unit 21 b an uplink packet addressed to the HeNB-GW 14a.
   (S5b) The protocol termination unit 21 b encapsulates the above packet into an luh packet and sends it to the HNB-GW 13a.
   (S5c) The HNB-GW 13a decapsulates the above packet and forwards the contained packet to the HeNB-GW 14a.
   (S5d) Similarly to the uplink described above, a downlink packet is sent from the HeNB-GW 14a to the protocol termination unit 22b via the HNB-GW 13a and protocol termination unit 21 b.
   The above-described sequence provides a 3G-side communication path as an alternative path when disruption of communication is detected at the LTE femtocell unit 22. The LTE communication can thus continue its operation with the new path.
(2) LTE communication using 3G-side communication path when disruption of communication is detected at HeNB-GW 14a
   FIG. 5 illustrates another sequence of LTE communication using a 3G-side communication path, which performs an LTE-to-3G switchover of communication paths when disruption of communication is detected at the HeNB-GW 14a.
   (S11) The HeNB-GW 14a detects disruption of communication.
   (S12a-S12b) The HeNB-GW 14a notifies the HMS 15a of the communication disruption by sending a communication disruption notice.
   (S13a-S13f) The HMS 15a forwards this communication disruption notice to the control unit 23b. The control unit 23b then sends a session switching request to the protocol termination units 21 b and 22b.
   (S14a-S14b) The HMS 15a sends a session switching request to the HNB-GW 13a.
   (S15a-S15d) Uplink and downlink packets are transported between the protocol termination unit 22b and HeNB-GW 14a similarly to steps S5a to S5d discussed above in FIG. 4.
   The above-described sequence provides a 3G-side communication path as an alternative path when disruption of communication is detected at the HeNB-GW 14a. The LTE communication can thus continue its operation with the new path.
(3) LTE communication using 3G-side communication path when excessive session count is detected in HeNB-GW 14a or SeGW 14b for HeNB-GW
   FIG. 6 illustrates yet another sequence of LTE communication using a 3G-side communication path, which performs an LTE-to-3G switchover of communication paths when an excessive session count is detected at the HeNB-GW 14a.
   (S21 a-S21 b) The SeGW 14b for HeNB-GW forwards a session setup request from the protocol termination unit 22b to the HeNB-GW 14a. The HeNB-GW 14a, however, detects an excessive session count (or detects that the total amount of traffic exceeds its upper limit).
   (S22a-S22d) The HeNB-GW 14a thus sends an excessive session notice to the HMS 15a, and the HMS 15a propagates it to the control unit 23b.
   (S23a-S23d) The control unit 23b sends a session switching request to the protocol termination units 21 b and 22b.
   (S24a-S24b) The HMS 15a sends a session switching request to the HNB-GW 13a.
   (S25a-S25d) Uplink and downlink packets are transported between the protocol termination unit 22b and HeNB-GW 14a similarly to steps S5a to S5d discussed above in FIG. 4.
      The above-described communication sequence provides a 3G-side communication path to distribute the traffic load when an excessive session count is detected at the HeNB-GW 14a. The LTE communication can thus continue its operation with the provided path.

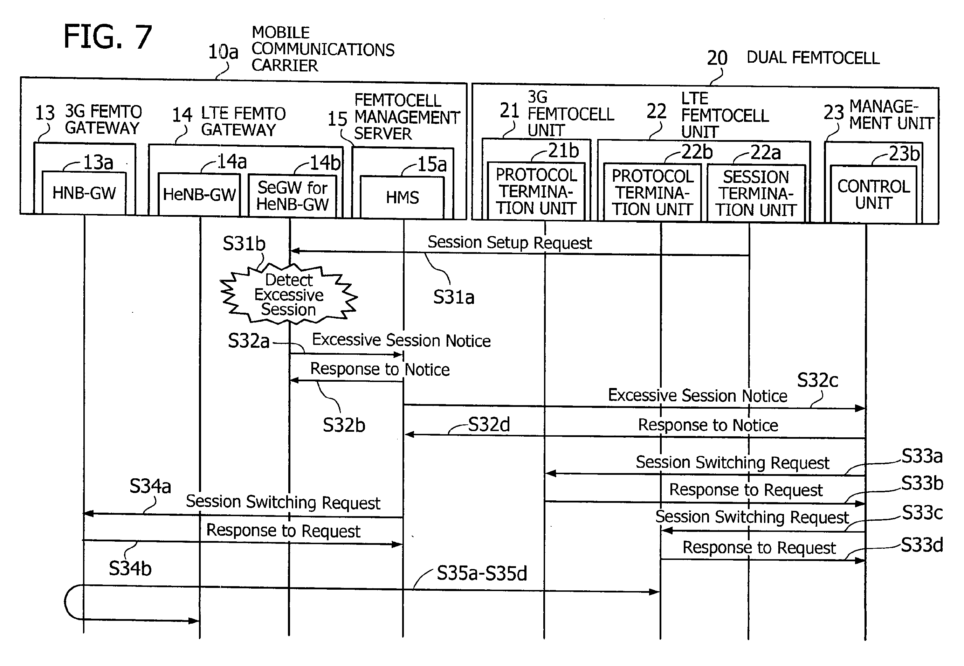

      FIG. 7 illustrates still another sequence of LTE communication using a 3G-side communication path, which performs an LTE-to-3G switchover of communication paths when an excessive session count is detected at the SeGW 14b for HeNB-GW.
   (S31 a-S31 b) The SeGW 14b for HeNB-GW receives a session setup request from the session termination unit 22a. The SeGW 14b for HeNB-GW, however, detects an excessive session count (or detects that the total amount of traffic exceeds its upper limit).
   (S32a-S32d) The SeGW 14b for HeNB-GW thus sends an excessive session notice to the HMS 15a, and the HMS 15a propagates it to the control unit 23b.
   (S33a-S33d) The control unit 23b sends a session switching request to the protocol termination units 21 b and 22b.
   (S34a-S34b) The HMS 15a sends a session switching request to the HNB-GW 13a.
   (S35a-S35d) Uplink and downlink packets are transported between the protocol termination unit 22b and HeNB-GW 14a similarly to steps S5a to S5d discussed above in FIG. 4.
   The above-described communication sequence provides a 3G-side communication path to distribute the traffic load when an excessive session count is detected at the SeGW 14b for HeNB-GW. The LTE communication can thus continue its operation with the provided path.
(4) 3G communication using LTE-side communication path when disruption of communication is detected in dual femtocell 20
   FIG. 8 illustrates a sequence of 3G communication using an LTE-side communication path, which performs a 3G-to-LTE switchover of communication paths when disruption of communication is detected in the dual femtocell 20.
   (S41) The protocol termination unit 21b in the 3G femtocell unit 21 detects disruption of communication.
   (S42a-S42b) The protocol termination unit 21b notifies the control unit 23b in the management unit 23 of the communication disruption by sending a communication disruption notice.
   (S43a-S43f) The control unit 23b forwards this communication disruption notice to the HMS 15a. The HMS 15a then sends a session switching request to the HeNB-GW 14a and HNB-GW 13a.
   (S44a-S44b) The control unit 23b sends a session switching request to the protocol termination unit 22b.
   (S45a) The protocol termination unit 21b sends the protocol termination unit 22b an uplink packet addressed to the HNB-GW 13a.
   (S45b) The protocol termination unit 22b encapsulates this uplink packet into an S1 packet and sends it to the HeNB-GW 14a.
   (S45c) The HeNB-GW 14a decapsulates the above packet and forwards the contained packet to the HNB-GW 13a.
   (S45d) Similarly to the uplink packet described above, a downlink packet is sent from the HNB-GW 13a to the protocol termination unit 21b via the HeNB-GW 14a and protocol termination unit 22b.
   The above-described sequence provides an LTE-side communication path as an alternative path when disruption of communication is detected at the 3G femtocell unit 21. The 3G communication can thus continue its operation with the new path.
(5) 3G communication using LTE-side communication path when disruption of communication is detected at HNB-GW 13a
   FIG. 9 illustrates another sequence of 3G communication using an LTE-side communication path, which performs a 3G-to-LTE switchover of communication paths when disruption of communication is detected at the HNB-GW 13a.
   (S51) The HNB-GW 13a detects disruption of communication.
   (S52a-S52b) The HNB-GW 13a notifies the HMS 15a of the communication disruption by sending a communication disruption notice.
   (S53a-S53f) The HMS 15a forwards this communication disruption notice to the control unit 23b. The control unit 23b then sends a session switching request to the protocol termination units 21 b and 22b.
   (S54a-S54b) The HMS 15a sends a session switching request to the HeNB-GW 14a.
   (S55a-S55d) Uplink and downlink packets are transported between the protocol termination unit 21b and HNB-GW 13a similarly to steps S45a to S45d discussed above in FIG. 8.
   The above-described sequence provides an LTE-side communication path as an alternative path when disruption of communication is detected at the HNB-GW 13a. The 3G communication can thus continue its operation with the new path.
(6) 3G communication using LTE-side communication path when excessive session count is detected in HNB-GW 13a or SeGW 13b for HNB-GW
   FIG. 10 illustrates yet another sequence of 3G communication using an LTE-side communication path, which performs a 3G-to-LTE switchover of communication paths when an excessive session count is detected at the HNB-GW 13a.
   (S61 a-S61b) The SeGW 13b for HNB-GW forwards a session setup request from the session termination unit 21a to the HNB-GW 13a. The HNB-GW 13a, however, detects an excessive session count (or detects that the total amount of traffic has already reached its upper limit).
   (S62a-S62d) The HNB-GW 13a thus sends an excessive session notice to the HMS 15a, and the HMS 15a propagates it to the control unit 23b.
   (S63a-S63d) The control unit 23b then sends a session switching request to the protocol termination units 21 b and 22b.
   (S64a-S64b) The HMS 15a sends a session switching request to the HeNB-GW 14a.
   (S65a-S65d) Uplink and downlink packets are transported between the protocol termination unit 21b and HNB-GW 13a similarly to steps S45a to S45d discussed above in FIG. 8.
   The above-described communication sequence provides an LTE-side communication path to distribute the traffic load when an excessive session count is detected at the HNB-GW 13a. The 3G communications can thus continue its operation with the provided path.

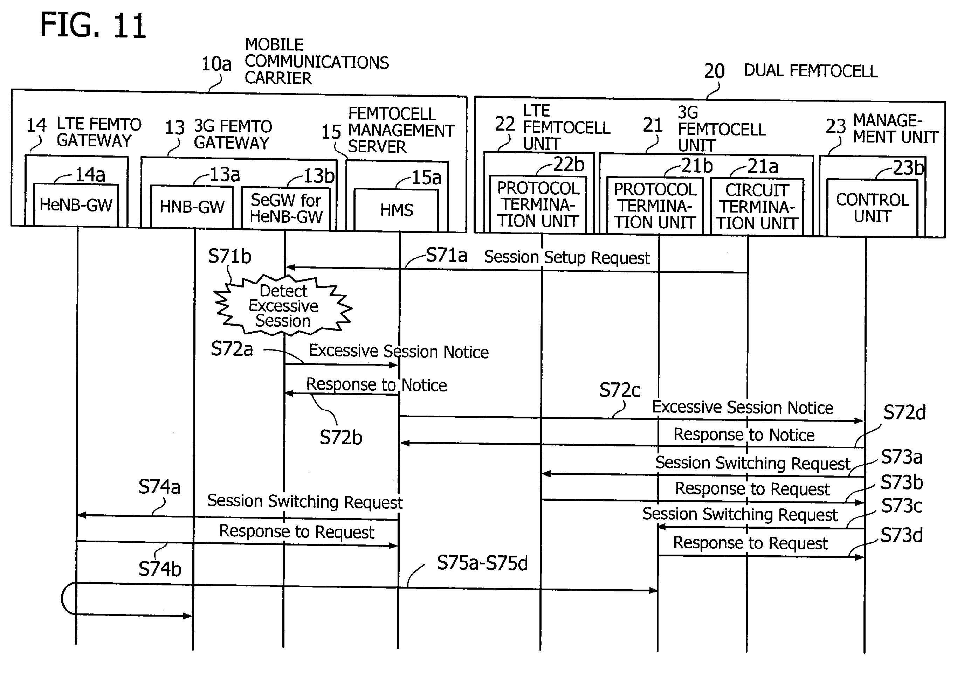

   FIG. 11 illustrates still another sequence of 3G communication using an LTE-side communication path, which performs a 3G-to-LTE switchover of communication paths when an excessive session count is detected at the SeGW 13b for HNB-GW.
   (S71 a-S71 b) The SeGW 13b for HNB-GW receives a session setup request from the session termination unit 21a. The SeGW 13b for HNB-GW, however, detects an excessive session count (or detects that the total amount of traffic exceeds its upper limit).
   (S72a-S72d) The SeGW 13b for HNB-GW thus sends an excessive session notice to the HMS 15a, and the HMS 15a propagates it to the control unit 23b.
   (S73a-S73d) The control unit 23b then sends a session switching request to the protocol termination units 21 b and 22b.
   (S74a-S74b) The HMS 15a sends a session switching request to the HeNB-GW 14a.
   (S75a-S75d) Uplink and downlink packets are transported between the protocol termination unit 21b and HNB-GW 13a similarly to steps S45a to S45d discussed above in FIG. 8.
   The above-described communication sequence provides an LTE-side communication path to distribute the traffic load when an excessive session count is detected at the SeGW 13b for HNB-GW. The 3G communication can thus continue its operation with the provided path.
(7) LTE communication using 3G-side communication paths for redundancy purposes
   FIG. 12 illustrates a sequence of LTE communication using a 3G-side communication path as a redundant communication path.
   (S81) The dual femtocell 20 starts up, causing its protocol termination unit 22b to start LTE communication with the HeNB-GW 14a.
   (S82a-S82b) The protocol termination unit 22b sends a redundant path setup request (simply "redundant path request" in FIG. 12 and subsequent figures) to the control unit 23b in the management unit 23.
   (S83a-S83f) The control unit 23b forwards this redundant path setup request to the HMS 15a, and the HMS 15a propagates it to the HNB-GW 13a and HeNB-GW 14a.
   (S84a-S84b) The control unit 23b sends a redundant path setup request to the protocol termination unit 21 b.
   (S85a) The protocol termination unit 22b sends the protocol termination unit 21 b an uplink packet addressed to the HeNB-GW 14a. (The same packet is also transmitted over a 3G communication path.)
   (S85b) The protocol termination unit 21b encapsulates the above packet into an luh packet and sends it to the HNB-GW 13a.
   (S85c) The HNB-GW 13a decapsulates the above packet and forwards the contained packet to the HeNB-GW 14a.
   (S85d) Similarly to the uplink packet described above, a downlink packet is sent from the HeNB-GW 14a to the protocol termination unit 22b via the HNB-GW 13a and protocol termination unit 21 b.
   The above-described communication sequence establishes a 3G communication path, in addition to an LTE communication path, when the dual femtocell 20 starts up for LTE communication. The mobile communications carrier 10a and dual femtocell 20 can thus be connected by both 3G and LTE paths to transport packets of LTE communication. This means that the LTE communication path is protected by a redundant 3G communication path, making it possible to continue ongoing communication even if the LTE communication path encounters disruption. That is, the same packets are transmitted over two paths, one for normal use and the other for backup use in case of disruption. The network system can therefore recover from communication disruption and other failures more quickly.
(8) 3G communication using LTE-side communication paths for redundancy purposes
   FIG. 13 illustrates a sequence of 3G communication using an LTE-side communication path as a redundant communication path.
   (S91) The dual femtocell 20 starts up, causing its protocol termination unit 21 b to start 3G communication with the HNB-GW 13a.
   (S92a-S92b) The protocol termination unit 21b sends a redundant path setup request to the control unit 23b in the management unit 23.
   (S93a-S93f) The control unit 23b forwards this redundant path setup request to the HMS 15a, and the HMS 15a propagates it to the HeNB-GW 14a and HNB-GW 13a.
   (S94a-S94b) The control unit 23b sends a redundant path setup request to the protocol termination unit 22b.
   (S95a) The protocol termination unit 21b sends the protocol termination unit 22b an uplink packet addressed to the HNB-GW 13a. (The same packet is also transmitted over an LTE communication path.)
   (S95b) The protocol termination unit 22b encapsulates this uplink packet into an S1 packet and sends it to the HeNB-GW 14a.
   (S95c) The HeNB-GW 14a decapsulates the above packet and forwards the contained packet to the HNB-GW 13a.
   (S95d) Similarly to the uplink packet described above, a downlink packet is sent from the HNB-GW 13a to the protocol termination unit 21b via the HeNB-GW 14a and protocol termination unit 22b.

The above-described communication sequence establishes an LTE communication path, in addition to a 3G communication path, when the dual femtocell 20 starts up for 3G communication. The mobile communications carrier 10a and dual femtocell 20 can thus be connected by both 3G and LTE paths to transport packets of 3G communication. This means that the 3G communication path is protected by a redundant LTE communication path, making it possible to continue ongoing communication even the 3G communication path encounters disruption. That is, the same packets are transmitted over two paths, one for normal use and the other for backup use in case of disruption. The network system can therefore recover from communication disruption and other failures more quickly.

The proposed network system uses various messages. Those messages are composed in accordance with some specific message formats that define how to organize the content data. The following section will describe several examples of such message formats.

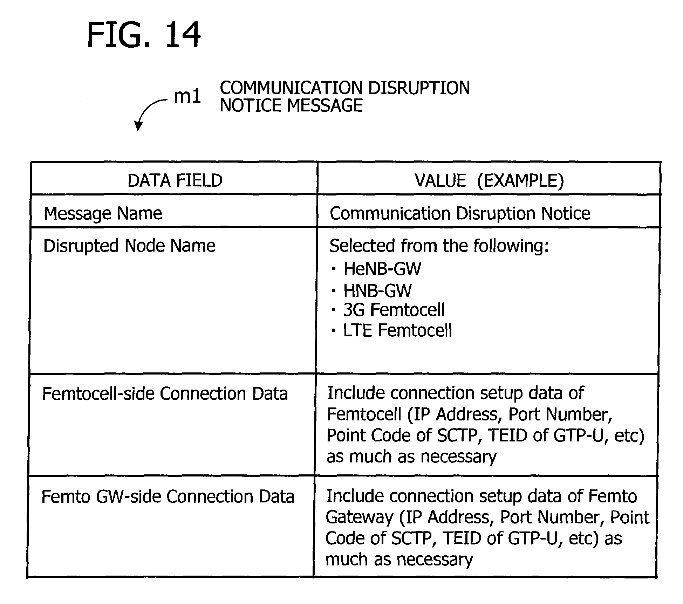

FIG. 14 illustrates a data format of a communication disruption notice. The illustrated communication disruption notice message m1 is formed from the following data fields: Message Name, Disrupted Node Name, Femtocell-side Connection Data, and Femto GW-side Connection Data.

For example, the Message Name field contains a value of "Communication Disruption Notice." The Disrupted Node Name field contains a value of "HeNB-GW" or "HNB-GW" or "3G Femtocell" or "LTE Femtocell." The femtocell-side connection data field contains as much connection setup data as necessary for a femtocell, which may include: Internet Protocol (IP) address, port number, point code of Stream Control Transmission Protocol (SCTP), and Tunnel Endpoint Identifier (TEID) of General Packet Radio Service (GPRS) Tunneling Protocol-User plane (GTP-U). The femto GW-side connection data field contains as much connection setup data as necessary for a femto gateway, which may include: IP address, port number, point code of SCTP, and TEID of GTP-U.

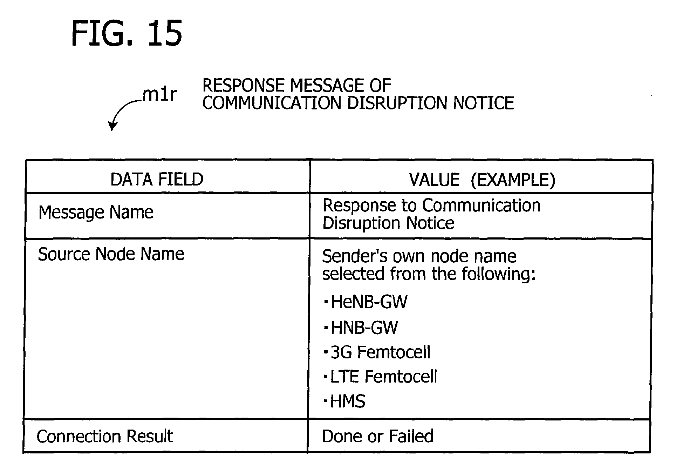

FIG. 15 illustrates a data format of a response to the communication disruption notice. The illustrated response message m1r to communication disruption notice is formed from the following data fields: Message Name, Source Node Name, and Connection Result.

For example, the Message Name field contains a value of "Response to Communication Disruption Notice." The Source Node Name field contains a value of "HeNB-GW" or "HNB-GW" or "3G Femtocell" or "LTE Femtocell" or "HMS." The Connection Result field contains a value of either "Done" or "Failed."

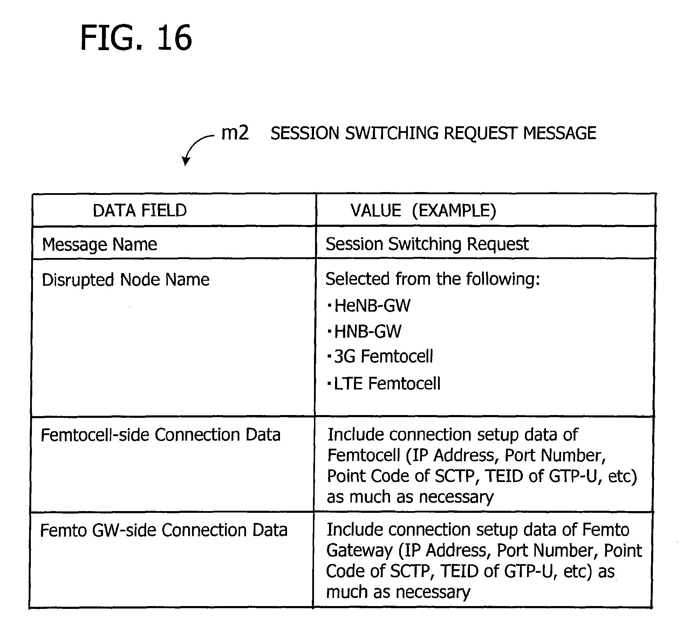

FIG. 16 illustrates a data format of a session switching request. The illustrated session switching request message m2 is formed from the following data fields: Message Name, Disrupted Node Name, Femtocell-side Connection Data, and Femto GW-side Connection Data.

For example, the Message Name Field contains a value of "Session Switching Request." The Disrupted Node Name field contains a value of "HeNB-GW" or "HNB-GW" or "3G Femtocell" or "LTE Femtocell."

The femto GW-side connection data field contains as much connection setup data as necessary for a femto gateway, which may include: IP address, port number, point code of SCTP, and TEID of GTP-U. The femto GW-side connection data field contains as much connection setup data as necessary for a femto gateway, which may include: IP address, port number, point code of SCTP, and TEID of GTP-U.

The session switching request message m2 is sent by the HMS 15a or control unit 23b when either has received a communication disruption notice or an excessive session notice. Accordingly the femtocell-side connection data and femto GW-side connection data fields of this session switching request message m2 are populated with the corresponding values stored in the communication disruption notice or excessive session notice that has just been received.

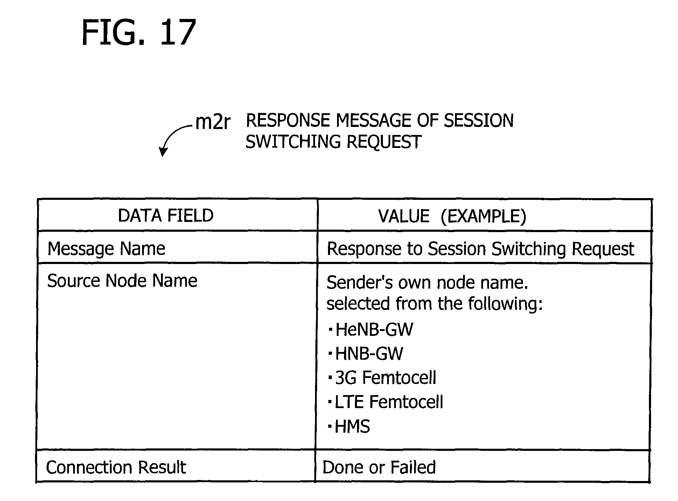

FIG. 17 illustrates a data format of a response to a session switching request. The illustrated response message m2r of session switching request is formed from the following data fields: Message Name, Source Node Name, and Connection Result.

For example, the Message Name field contains a value of "Response to Session Switching Request." The Source Node Name field contains a value of "HeNB-GW" or "HNB-GW" or "3G Femtocell" or "LTE Femtocell" or "HMS." The Connection Result field contains a value of either "Done" or "Failed."

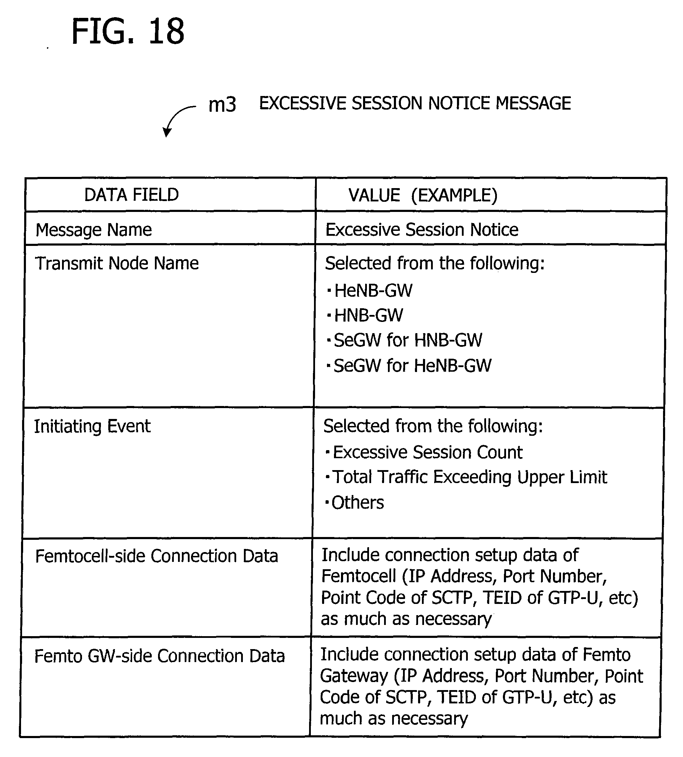

FIG. 18 illustrates a data format of an excessive session notice. The illustrated excessive session notice message m3 is formed from the following data fields: Message Name, Transmit Node Name, Initiating Event, Femtocell-side Connection Data, and Femto GW-side Connection Data.

For example, the Message Name field contains a value of "Excessive Session Notice." The Source Node Name field contains a value of "HeNB-GW" or "HNB-GW" or "SeGW for HNB-GW" or "SeGW for HeNB-GW." The Initiating Event field contains a value indicating either excessive session or total traffic exceeding upper limit, or others.

The femtocell-side connection data field contains as much connection setup data as necessary for a femtocell, which may include: IP address, port number, point code of SCTP, and TEID of GTP-U. The femto GW-side connection data field contains as much connection setup data as necessary for a femto gateway, which may include: IP address, port number, point code of SCTP, and TEID of GTP-U.

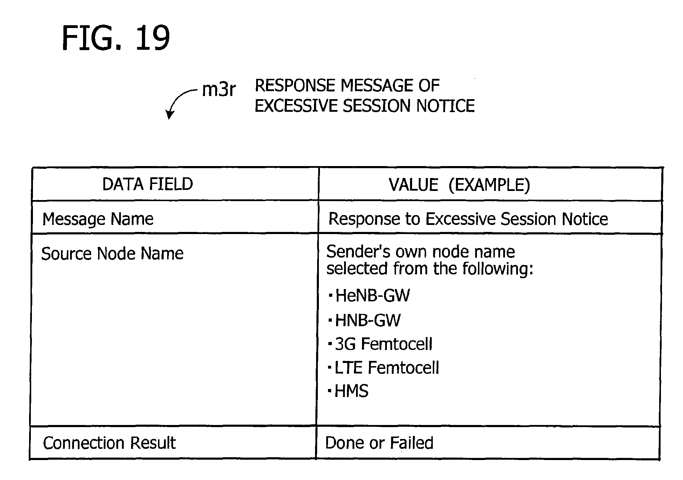

FIG. 19 illustrates a data format of a response to an excessive session notice. The illustrated response message m3r of an excessive session notice is formed from the following data fields: Message Name, Source Node Name, and Connection Result.

For example, the Message Name field contains a value of "Response to Excessive Session Notice." The Source Node Name field contains a value of "HeNB-GW" or "HNB-GW" or "3G Femtocell" or "LTE Femtocell" or "HMS" to indicate the message sender's own node name. The Connection Result field contains a value of either "Done" or "Failed."

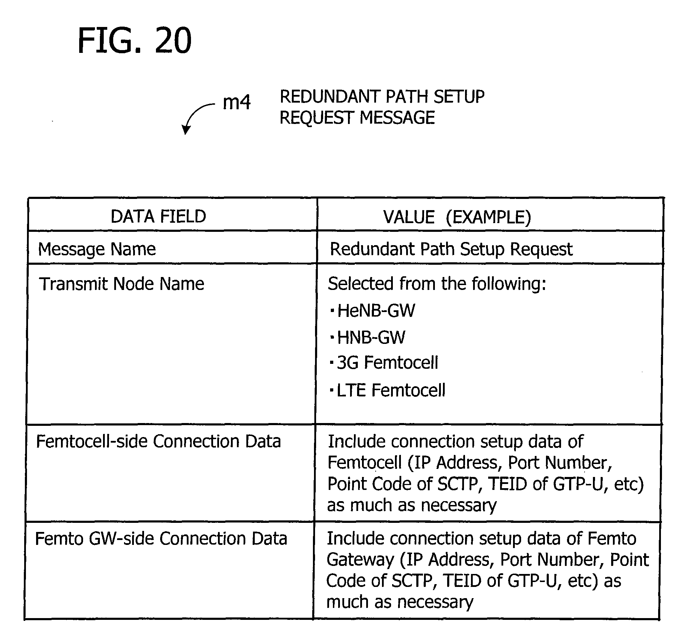

FIG. 20 illustrates a data format of a redundant path setup request. The illustrated redundant path setup request message m4 is formed from the following data fields: Message Name, Transmit Node Name, Femtocell-side Connection Data, and Femto GW-side Connection Data.

For example, the Message Name field contains a value of "Redundant Path Setup Request." The Transmit Node Name field contains a value of "HeNB-GW" or "HNB-GW" or "3G Femtocell" or "LTE Femtocell." The femtocell-side connection data field contains as much connection setup data as necessary for a femtocell, which may include: IP address, port number, point code of SCTP, and TEID of GTP-U. The femto GW-side connection data field contains as much connection setup data as necessary for a femto gateway, which may include: IP address, port number, point code of SCTP, and TEID of GTP-U.

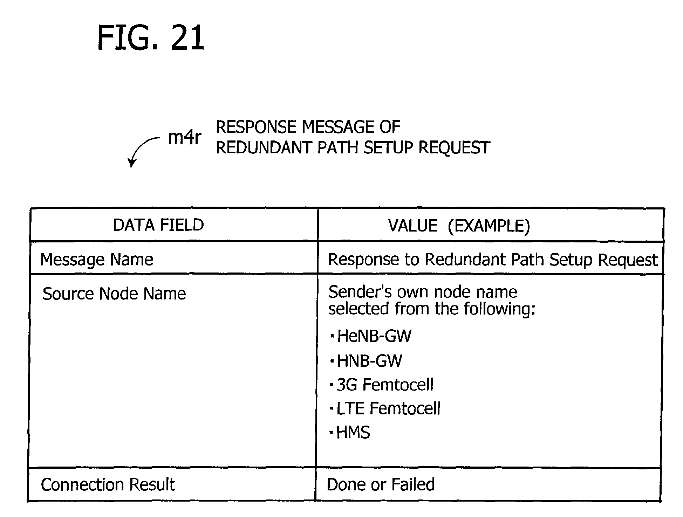

FIG. 21 illustrates a data format of a response to a redundant path setup request. The illustrated response message m4r of redundant path setup request is formed from the following data fields: Message Name, Source Node Name, and Connection Result.

For example, the Message Name field contains a value of "Response to Redundant Path Setup Request." The Source Node Name field contains a value of "HeNB-GW" or "HNB-GW" or "3G Femtocell" or "LTE Femtocell" or "HMS." The Connection Result field contains a value of either "Done" or "Failed."

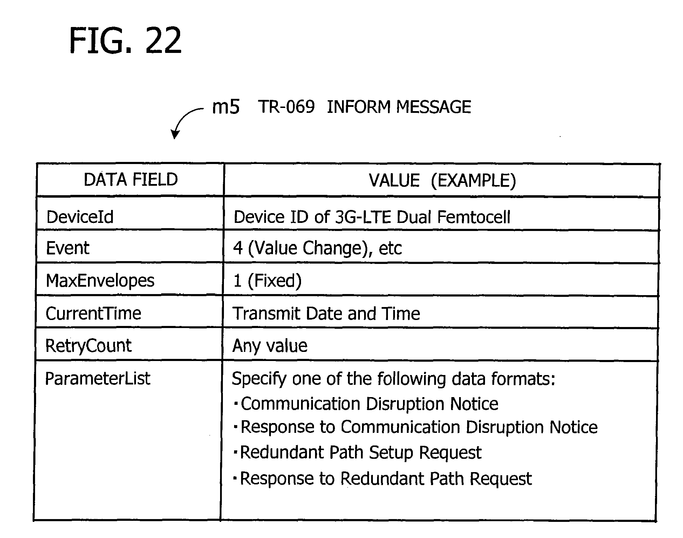

FIG. 22 illustrates a data format of control messages. The HMS 15a and control unit 23b use control messages of TR-069 since the 3GPP standard requires them to use the TR-069 protocols in their communication. Specifically, FIG. 22 illustrates a data format of Inform message m5 according to TR-069, which applies to the signaling of a communication disruption notice, a response to communication disruption notice, a redundant path setup request, and a response to redundant path setup request.

More specifically, Inform message m5 is formed from the following data fields ("Arguments" in the TR-069 specification): Deviceld, Event, MaxEnvelopes, CurrentTime, RetryCount, and ParameterList. For example, the Deviceld field contains a device identifier of a dual femtocell that supports both the 3G and LTE technologies. The Event field may contain, for example, a value of four to indicate a VALUE CHANGE event. The MaxEnvelopes field is set to a fixed value of one. The CurrentTime field indicates the transmit date and time. The RetryCount field may be set to any values. The ParameterList field is given a value that indicates communication disruption notice, or response to communication disruption notice, or redundant path setup request, or response to redundant path setup request.

While various messages have been described above, the proposed network system may transmit other messages over new paths according to the present embodiment. Those messages may have any appropriate data format since they are not particularly specified in the 3GPP standard.

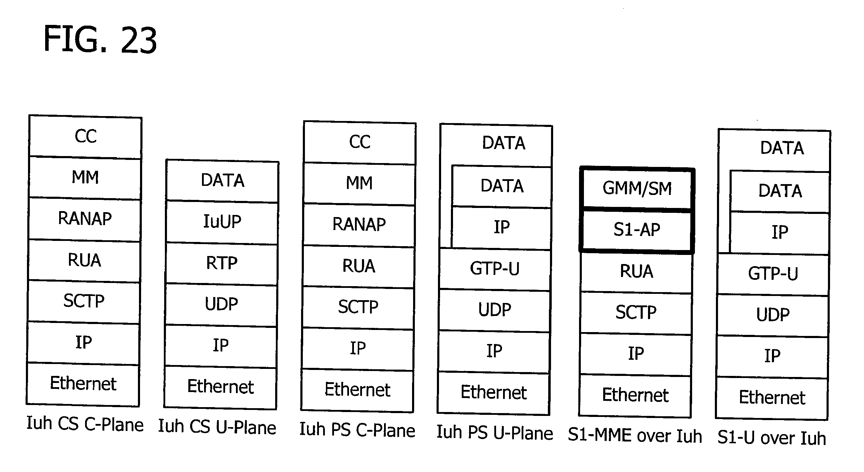

Protocols used in the proposed network system are organized in a layered structure referred to as the protocol stack. For example, FIG. 23 illustrates protocol stacks of luh. The bold frames indicate stack elements that are different from existing ones. luh interface is organized by the following protocol stacks: lu-CS C-Plane, lu-CS U-Plane, lu-PS C-Plane, lu-PS U-Plane, S1-MME over luh, and S1-U over luh. Here, the protocol stacks of lu-CS C-Plane, lu-CS U-Plane, lu-PS C-Plane, and lu-PS U-Plane are similar to those of existing systems.

Specifically, lu-CS C-Plane and lu-PS C-Plane are both formed from layers of Ethernet^{(R)}, IP, SCTP, RANAP User Adaptation layer (RUA), Radio Access Network Application Part (RANAP), Mobility Management (MM), and Call Control (CC) layers in that order, from bottom to top. lu-CS U-Plane is a stack of layers of Ethernet, IP, User Datagram Protocol (UDP), Real Time Transport Protocol (RTP), lu User Plane (IuUP), and DATA in that order, from bottom to top. lu-PS U-Plane and S1-U over luh are both formed from the layers of Ethernet, IP, UDP, GTP-U, IP, DATA, and DATA in that order, from bottom to top. S1-MME over luh is a stack of layers of Ethernet, IP, SCTP, RUA, S1-AP, and GPRS Mobility Management/Session Management (GMM/SM) in that order, from bottom to top.

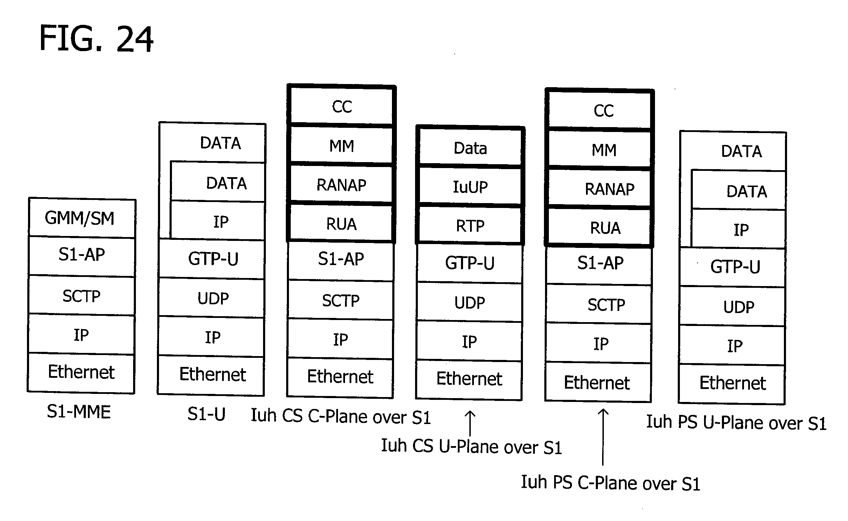

FIG. 24 illustrates protocol stacks of S1. The bold frames indicate stack elements that are different from existing ones. S1 interface is organized by the following protocol stacks: S1-MME, S1-U, luh-CS C-Plane over S1, luh-CS U-Plane over S1, luh-PS C-Plane over S1, and luh-PS U-Plane over S1. Here, the protocol stack S1-U is similar to that of existing systems, as is luh-PS U-Plane over S1.

Specifically, S1-MME is a stack of layers including Ethernet, IP, SCTP, S1-AP, and GMM/SM in that order, from bottom to top. S1-U and luh-PS U-Plane over S1 are both formed from the layers of Ethernet, IP, UDP, GTP-U, IP, DATA, and DATA in that order, from bottom to top. luh-CS C-Plane over S1 and luh-PS C-Plane over S1 are both formed from the layers of Ethernet, IP, SCTP, S1-AP, RUA, RANAP, MM, and CC in that order, from bottom to top. luh-CS U-Plane over S1 is a stack of layers including Ethernet, IP, UDP, GTP-U, RTP, IuUP, and DATA in that order, from bottom to top.

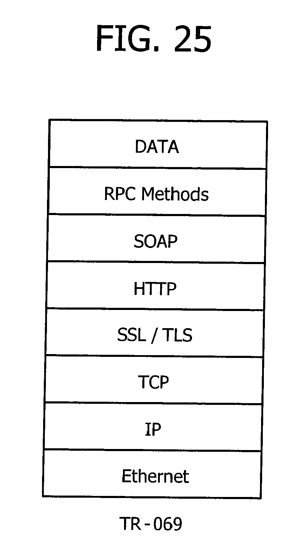

FIG. 25 illustrates a protocol stack of the control interface between the HMS 15a and control unit 23b. This control interface TR-069 is a stack of layers including Ethernet, IP, Transmission Control Protocol (TCP), SSL Protocol Version 3.0/RFC2246 -The TLS Protocol Version 1.0 (SSL/TLS), RFC 2616 - Hypertext Transfer Protocol (HTTP), Simple Object Access Protocol (SOAP), Remote Procedure Call (RPC) Methods, and DATA in that order, from bottom to top.

Various features of the embodiments have been discussed above. Those features make it possible to improve the quality of communication.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present invention have been described in detail, it should be understood that various changes, substitutions, and alterations could be made hereto without departing from the spirit and scope of the invention.

## Claims

1. A communications system comprising:
a carrier-side communication apparatus comprising:
a first upper node to perform communication through a first communication session,
a second upper node to perform communication through a second communication session, and
an upper communication control unit to control the first upper node and the second upper node; and
a base station apparatus comprising:
a first communication unit to communicate with the first upper node through the first communication session established therewith,
a second communication unit to communicate with the second upper node through the second communication session established therewith, and
a communication control unit to control the first communication unit and the second communication unit;
wherein the communication control unit and the upper communication control unit are configured to perform communication path switching so as to use the second communication session to transport a signal intended for the first communication session, when the first communication session is disrupted, or when a number of existing first communication sessions has reached an upper limit that the first upper node can handle.

2. The communications system according to claim 1, wherein:
the communication controller and the upper communication controller are responsive to an event that sets up a new first communication session between the first communication unit and the first upper node and starts communication therethrough;
in response to the event, the communication control unit causes the first communication unit to send an uplink signal of the new first communication session to the first upper node and also causes the first and second communication units to send the same uplink signal to the second upper node through a new second communication session; and
in response to the event, the upper communication control unit causes the first upper node to send a downlink signal for the new first communication session to the first communication unit and also causes the first and second upper nodes to send the same signal to the second communication unit through the new second communication session.

3. The communications system according to claim 1, wherein:
the second communication unit encapsulates an uplink signal intended for the first communication session into a signal to be transmitted to the second upper node through the second communication session; and
the second upper node encapsulates a downlink signal intended for the first communication session into a signal to be transmitted to the second communication unit through the second communication session.

4. A communication apparatus positioned at an upper carrier level, comprising:
a first upper node to communicate with a base station through a first communication session;
a second upper node to communicate with the base station through a second communication session; and
an upper communication control unit to control the first upper node and the second upper node, the upper communication control unit being configured to perform communication path switching so as to use the second communication session to transport a signal intended for the first communication session, when the first communication session is disrupted, or when a number of existing first communication sessions has reached an upper limit that the first upper node can handle.

5. A base station apparatus, comprising:
a first communication unit to communicate with an upper carrier network through a first communication session established therewith;
a second communication unit to communicate with the upper carrier network through a second communication session established therewith; and
a communication control unit to control the first communication unit and the second communication unit, the communication control unit being configured to perform communication path switching so as to use the second communication session to transport a signal intended for the first communication session, when the first communication session is disrupted, or when a number of existing first communication sessions has reached an upper limit that the upper carrier network can handle.

6. A method of communication over communication sessions established between a carrier-side communication apparatus and a base station apparatus, the method comprising:
performing communication through first and second communication sessions established between the carrier-side communication apparatus and the base station apparatus; and
performing communication path switching so as to use the second communication session to transport a signal intended for the first communication session, when the first communication session is disrupted, or when a number of existing first communication sessions has reached an upper limit that the carrier-side communication apparatus can handle.

7. A communications system comprising:
a carrier-side communication apparatus comprising:
a W-CDMA node to perform communication through a W-CDMA communication session,
an LTE node to perform communication through an LTE communication session, and
an upper communication control unit to control the W-CDMA node and the LTE node; and
a base station apparatus comprising:
a W-CDMA communication unit to communicate with the W-CDMA node through the W-CDMA communication session established therewith,
an LTE communication unit to communicate with the LTE node through the LTE communication session established therewith, and
a communication control unit to control the W-CDMA communication unit and the LTE communication unit;
wherein the communication control unit and the upper communication control unit are configured to perform communication path switching so as to use the LTE communication session to transport a signal intended for the W-CDMA communication session, when the W-CDMA communication session is disrupted, or when a number of existing W-CDMA communication sessions has reached an upper limit that the W-CDMA node can handle, and
wherein the communication control unit and the upper communication control unit are configured to perform communication path switching to use the W-CDMA communication session to transport a signal intended for the LTE communication session, when the LTE communication session is disrupted, or when a number of existing LTE communication sessions has reached an upper limit that the LTE node can handle.

8. The communications system according to claim 7, wherein:
the communication controller and the upper communication controller are responsive to an event that sets up a new W-CDMA communication session between the W-CDMA communication unit and the W-CDMA node and starts communication therethrough;
in response to the event, the communication control unit causes the W-CDMA communication unit to send an uplink signal of the new W-CDMA communication session to the W-CDMA node and also causes the W-CDMA and LTE communication units to send the same uplink signal to the LTE node through a new LTE communication session; and
in response to the event, the upper communication control unit causes the W-CDMA node to send a downlink signal for the new W-CDMA communication session to the W-CDMA communication unit and also causes the W-CDMA and LTE nodes to send the same signal to the LTE communication unit through the new LTE communication session.

9. The communications system according to claim 7, wherein:
the communication controller and the upper communication controller are responsive to an event that sets up a new LTE communication session between the LTE communication unit and the LTE node and starts communication therethrough;
in response to the event, the communication control unit causes the LTE communication unit to send an uplink signal of the new LTE communication session to the LTE node and also causes the W-CDMA and LTE communication units to send the same uplink signal to the W-CDMA node through a new W-CDMA communication session; and
in response to the event, the upper communication control unit causes the LTE node to send a downlink signal for the new LTE communication session to the LTE communication unit and also causes the W-CDMA and LTE nodes to send the same signal to the W-CDMA communication unit through the new W-CDMA communication session.

10. The communications system according to claim 7, wherein:
the LTE node encapsulates a downlink signal intended for the W-CDMA communication session into a signal to be transmitted to the base station apparatus through the LTE communication session, when the W-CDMA communication session is disrupted, or when the number of existing W-CDMA communication sessions has reached the upper limit thereof; and
the W-CDMA node encapsulates a downlink signal intended for the LTE communication session into a signal to be transmitted to the base station apparatus through the W-CDMA communication session, when the LTE communication session is disrupted, or when the number of existing LTE communication sessions has reached the upper limit thereof.

11. The communications system according to claim 7, wherein:
the LTE communication unit encapsulates an uplink signal intended for the W-CDMA communication session into a signal to be transmitted to the carrier-side communication apparatus through the LTE communication session, when the W-CDMA communication session is disrupted, or when the number of existing W-CDMA communication sessions has reached the upper limit thereof; and
the W-CDMA communication unit encapsulates an uplink signal intended for the LTE communication session into a signal to be transmitted to the carrier-side communication apparatus through the W-CDMA communication session, when the LTE communication session is disrupted, or when the number of existing LTE communication sessions has reached the upper limit thereof.
